# EUROPÄISCHE PATENTSCHRIFT

(11) **EP 2 250 117 B1**
(45) Veröffentlichungstag und Bekanntmachung des Hinweises auf die Patenterteilung: **26.10.2011**
(21) Anmeldenummer: 09718797.5
(22) Anmeldetag: 10.03.2009
(51) Int. Cl.: B66C 13/18, B66C 23/36, B66C 23/62, B62D 55/116, B62D 55/084

(54) **RAUPENKRAN SOWIE VERFAHREN ZUR EINSTELLUNG EINER GRUND-ARBEITSPOSITION EINES DERARTIGEN RAUPENKRANS**
CRAWLER CRANE AND METHOD FOR ADJUSTING A BASE-WORK POSITION OF SAID TYPE OF CRAWLER CRANE
GRUE À CHENILLES, AINSI QUE PROCÉDÉ DE RÉGLAGE D'UNE POSITION DE MANOEUVRE AU SOL D'UNE GRUE À CHENILLES DE CE TYPE

(30) Priorität: 13.03.2008 DE 102008014139
(43) Veröffentlichungstag der Anmeldung: 17.11.2010
(73) Patentinhaber: Terex Demag GmbH, 66482 Zweibrücken (DE)
(72) Erfinder: NÖSKE, Ingo, 94330 Oberpiebing (DE); WECKBECKER, Alfons, 66482 Zweibrücken (DE); RUTZ, Werner, 66851 Queidersbach (DE)
(74) Vertreter: Hofmann, Matthias
(86) Internationale Anmeldenummer: PCT/EP2009/001701
(87) Internationale Veröffentlichungsnummer: WO 2009/112236

(56) Entgegenhaltungen:
- DE-A1- 1 634 725
- DE-A1- 3 534 626
- DE-A1- 3 706 931
- DE-U1- 9 406 572
- DE-U1-202006 002 023
- JP-A- 2002 087 337
- JP-U- 57 101 674
- JP-U- 64 001 077

## Beschreibung

Die Erfindung betrifft einen Raupenkran nach dem Oberbegriff des Anspruchs 1.

Ein Raupenkran der eingangs genannten Art ist bekannt aus der DE 94 06 572 U1. Weitere Raupenkrane sind beispielsweise in der DE 1 634 725 A1, der JP 64 001 077 U. der DE 35 34 626 A1. der DE 37 06 931 A1. der JP 2002 087 337 A1. der JP 57 101 674 U und der DE 20 2006 002 023 U1. offenbart. Kranausleger derartiger Raupenkrane können nur dann mit ihrer Nennlast arbeiten, wenn der Unterwagen mit den Raupenträgern auf einer praktisch nicht von der Horizontalen abweichenden Ebene aufsteht. Dies erfordert eine aufwändige Vorbereitung einer Grund-Arbeitsposition des bekannten Raupenkrans durch Planierarbeiten.

Es ist eine Aufgabe der vorliegenden Erfindung, einen Raupenkran der eingangs genannten Art derart weiterzubilden, dass der Aufwand zur Einstellung einer Grund-Arbeitsposition des Raupenkrans reduziert ist.

Diese Aufgabe ist erfindungsgemäß gelöst durch einen Raupenkran mit den im Anspruch 1 angegebenen Merkmalen.

Erfindungsgemäß wurde erkannt, dass sich ein Unterwagen des Raupenkrans mit den beiden Raupenträgern in vielen Fällen so aufstellen lässt, dass dieser praktisch keine Rollneigung um eine horizontale Achse quer zur Fahrtrichtung, sondern lediglich eine Wankneigung um eine Achse längs der Fahrtrichtung aufweist. Diese Wankneigung kann über den erfindungsgemäßen Doppellenker ausgeglichen werden. Der Verstellantrieb kann dabei motorisch, hydraulisch oder magnetisch ausgeführt sein. Prinzipiell ist es auch möglich, den Verstellantrieb nicht mit einem eigenen Verstellmotor auszurüsten, sondern die Verstellbewegung beispielsweise abgeleitet von einem anderen Motor des Raupenkrans oder auch von einem externen Motor anzutreiben. Prinzipiell reicht ein einziger derartiger Doppellenker aus, wobei die anderen Verbindungen der Raupenträger mit der mindestens einen Querbrücke dann passiv nachgerührt werden können. Bevorzugt ist es jedoch, wenn mehrere derartige Doppellenker eingesetzt werden. Es können beispielsweise auch mehrere in Fahrtrichtung hintereinander angeordnete derartige Doppellenker pro Raupenträger vorgesehen sein. Der Verstellantrieb kann kompakt mit hoher Leistungsdichte und Robustheit ausgerührt sein. Ein Getriebe des Verstellantriebs, das insbesondere als Untersetzungsgetriebe ausgeführt sein kann, erleichtert die Ankopplung und gegebenenfalls auch die Auslegung des Verstellmotors.

Eine Anordnung nach Anspruch 2 erhöht die Stabilität des Raupenkrans.

Mehrere angetrieben verstellbare Doppellenker nach Anspruch 3 verbessern die Einstellgenauigkeit einer Niveauregulierung des Raupenkrans.

Ein Unterlenker-Verstellantrieb nach Anspruch 4 senkt den Schwerpunkt des Raupenkrans. Eine über den Verstellantrieb angetriebene Schwenkachse ist dann insbesondere die Raupenträger-Unterschwenkachse.

Ein Getriebe nach Anspruch 5 kann einen Abstand zwischen einer Motorwelle des Verstellmotors und einer über diesen angetriebenen Komponente des Doppellenkers vergrößern, was die Konstruktion des Doppellenkers vereinfacht.

Ein Verstellantrieb nach Anspruch 6 ist robust. Die Mutter kann selbsthemmend ausgelegt sein. Diese Selbstsicherung kann mit einer feinfühligen Einstellbarkeit kombiniert sein, wodurch eine genaue Neigungseinstellung bzw. Nivellierbarkeit erreichbar ist. Über die Ausgestaltung des Verstellantriebs mit der Gewindestange und der Mutter kann aus dem rotatorischen Verstellantrieb eine translatorische, spielarme Bewegung zur Neigungseinstellung abgeleitet werden, deren Bewegungsüberwachung einfach möglich ist.

Eine Trapez-Gewindeausführung nach Anspruch 7 führt zu einer Selbsthemmung des Verstellantriebs. Zudem ist ein derartiges Trapezgewinde sehr tragfähig.

Eine angetriebene Gewindestange nach Anspruch 8 ermöglicht einen konstruktiv mit geringem Aufwand ausführbaren Verstellantrieb.

Eine Steuereinrichtung nach Anspruch 9 erlaubt eine Ansteuerung des Verstellantriebs insbesondere von einem Führerhaus des Raupenkrans aus.

Ein Neigungssensor nach Anspruch 10 ermöglicht eine präzise Neigungsmessung. Bei dem Neigungssensor kann es sich beispielsweise um ein berührungsfreies magnetoressistives Messelement mit einem Messbereich von +/- 10° handeln.

Ein Regelmodul nach Anspruch 11 ermöglicht eine automatisch geregelte Verstellung des Verstellantriebs zur Niveauregulierung des Oberwagens des Raupenkrans.

Eine Linearführung nach Anspruch 12 ermöglicht eine geführte Kraftübertragung zwischen der Mutter und dem angetrieben Lenker, wobei gleichzeitig die Möglichkeit einer hohen Kraftübertragung zwischen der Mutter und dem angetriebenen Lenker geschaffen ist. Die Linearführung kann durch eine Mehrzahl von Lagerrollen realisiert sein. Eine Lagerung der Linearführung kann beiderseits der Mutter erfolgen. Die Linearführung kann die Mutter in beiden Bewegungsrichtungen längs der Gewindestange abstützen.

Ein Ausführungsbeispiel der Erfindung wird nachfolgend anhand der Zeichnung näher erläutert. In dieser zeigen:
- Fig. 1: eine Seitenansicht eines Raupenkrans;
- Fig. 2: eine frontale Ansicht auf einen Unterwagen des Raupenkrans nach Fig. 1 zusammen mit Komponenten eines Kranaufbaus des Raupenkrans, wobei Auslegerelemente des Raupenkrans weggelassen sind;
- Fig. 3: einen vertikalen Querschnitt durch einen Raupenträger des Raupenkrans im Bereich einer Doppellenker-Verbindung von diesem mit einer gebrochen dargestellten Querbrücke des Unterwagens, wobei eine Raupe des Raupenträgers auf einem horizontal verlaufenden Untergrund stehend dargestellt ist;
- Fig. 4: den Raupenträger mit der Querbrücke und der Raupe in einer zu Fig. 3 ähnlichen Darstellung, wobei die Raupe auf einem geneigten Untergrund stehend dargestellt ist, so dass sich ein von Null verschiedener Wankwinkel des Unterwagens ergibt;
- Fig. 5: eine Detailansicht eines Abschnitts des Raupenträgers aus Blickrichtung V in Fig. 3;
- Fig. 6: im Vergleich zu Fig. 5 noch stärker im Detail eine Mutter als Bestandteil eines Verstellantriebs zum Verschwenken eines Unterlenkers des Unterwagens und damit zur Niveauregulierung des Raupenkrans;
- Fig. 7: einen Axialschnitt durch den Verstellantrieb im Bereich der Verbindung der Mutter nach Fig. 6 mit einer drehangetriebenen Gewindestange des Verstellantrieb; und
- Fig. 8: einen Schnitt gemäß Linie VIII-VIII in Fig. 7.

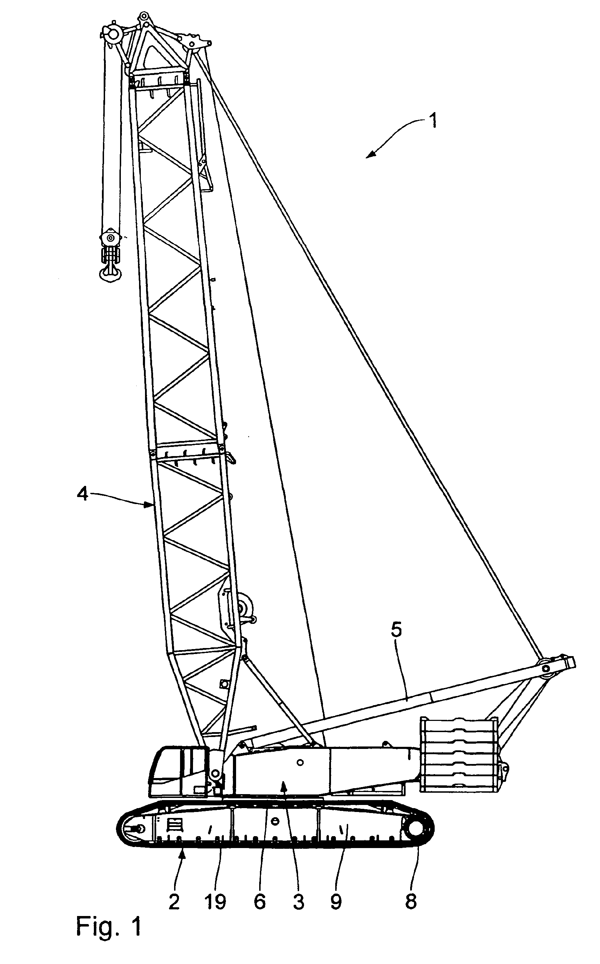

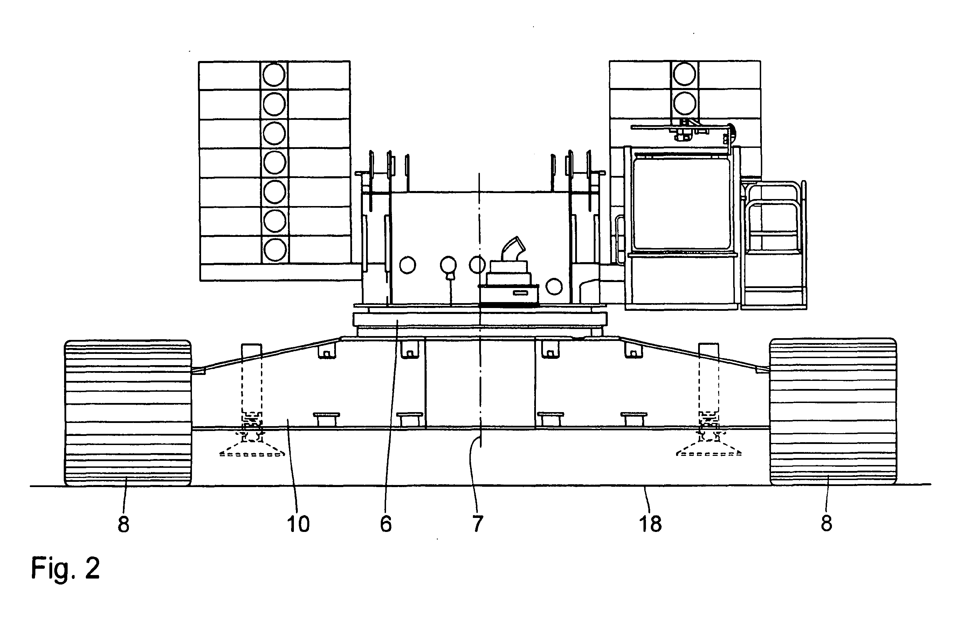

Ein Raupenkran 1 hat einen fahrbaren Unterwagen 2, einen Oberwagen 3, einen Kran-Hauptausleger 4 sowie einen Gegenausleger 5. Über eine Rollendrehverbindungseinrichtung 6, die in den Fig. 1 und 2 lediglich angedeutet ist, ist der Oberwagen 3 relativ zum Unterwagen 2 um eine Hochachse 7 drehbar.

Der Unterwagen hat zwei angetriebene Raupen 8, die von zwei parallel zueinander angeordneten Raupenträgern 9 getragen und geführt werden. Die beiden Raupenträger 9 sind miteinander durch eine Querbrücke 10 oder durch mehrere derartiger Querbrücken verbunden. Die mindestens eine Querbrücke 10 trägt wiederum die Rollendrehverbindungseinrichtung 6. Die Rollendrehverbindungseinrichtung 6 stellt ein Schwenkgelenk dar, das die mindestens eine Querbrücke 10 schwenkbar mit dem Oberwagen 3, also mit dem Kranaufbau, verbindet.

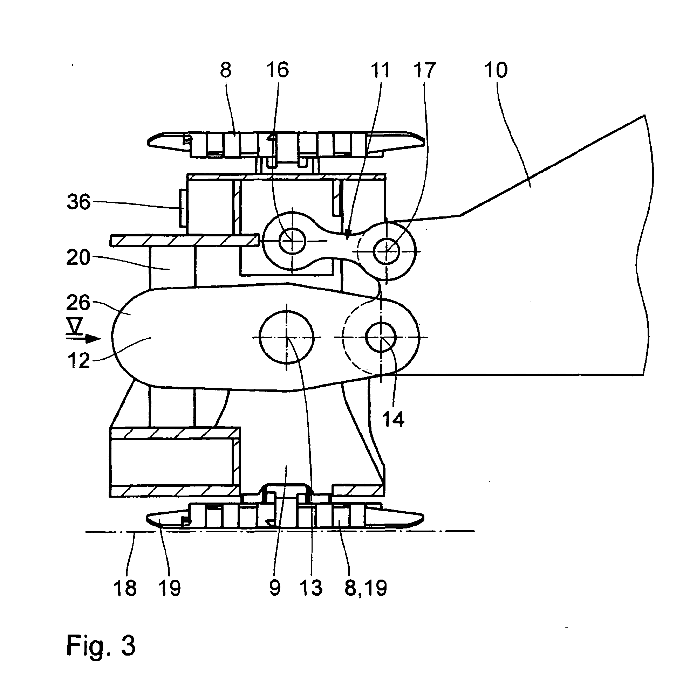

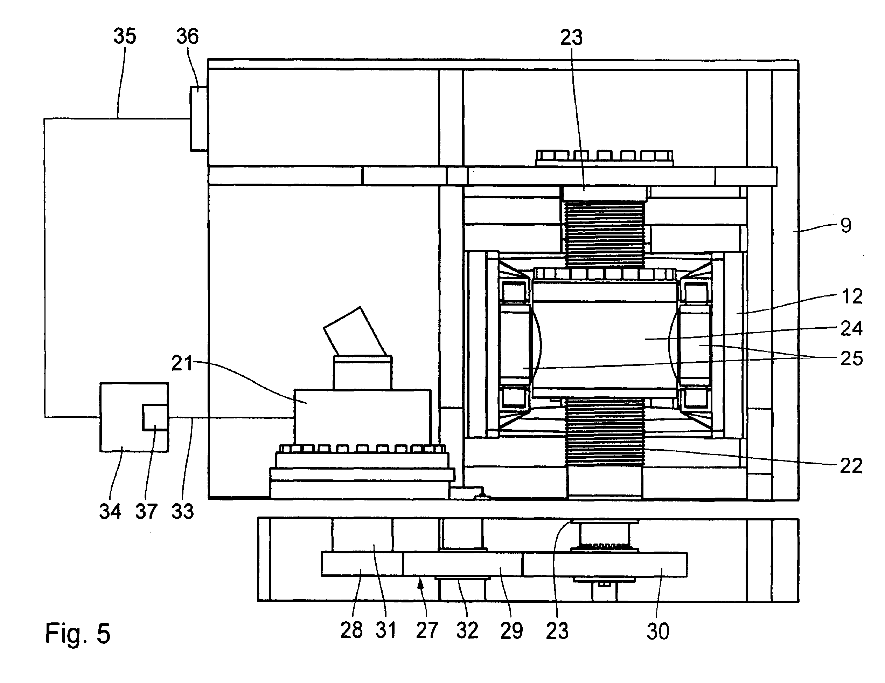

Die mindestens eine Querbrücke 10 ist an ihren beiden Enden mit dem jeweiligen Raupenträger 9 über einen Doppellenker 11 verbunden, der im Detail in den Fig. 3 bis 5 dargestellt ist. Der Doppellenker 11 hat einen Unterlenker 12, der über eine Raupenträger-Unterschwenkachse 13 am Raupenträger 9 und über eine Querbrücken-Unterschwenkachse 14 an der Querbrücke 10 angelenkt ist. Ferner hat der Doppellenker 11 einen Oberlenker 15, der über eine Raupenträger-Oberschwenkachse 16 am Raupenträger 9 und über eine Querbrücken-Oberschwenkachse 17 an der Querbrücke 10 angelenkt ist.

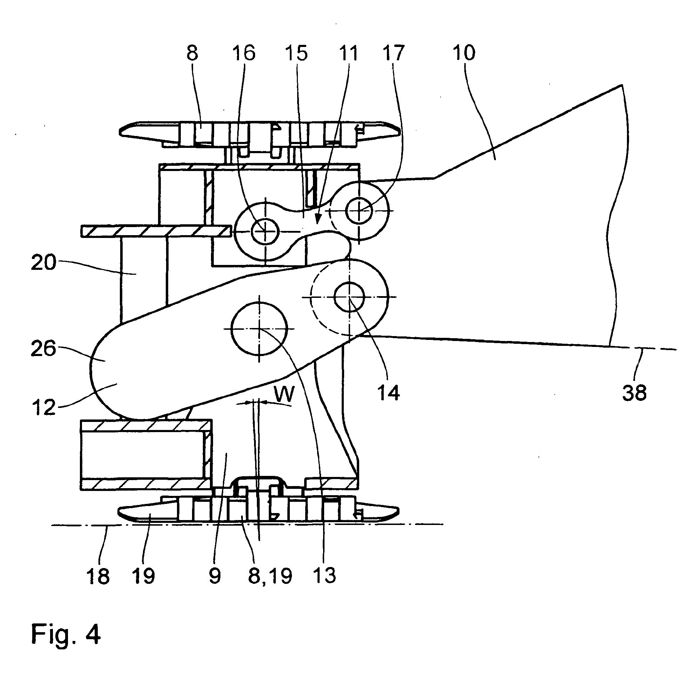

Sowohl der Unterlenker 12 als auch der Oberlenker 15 haben zwei gleich konturierte Lenkerplatten, die in der Zeichenebene der Fig. 3 und 4 beanstandet hintereinander angeordnet und über Achselemente fest miteinander verbunden sind. Der Oberlenker 15 erinnert dabei in seiner Gestalt an ein Kettenglied einer Fahrradkette.

Soweit mehrere Querträger 10 beim Raupenkran 1 vorhanden sind, ist jedes Querträgerende mit dem zugewandten Raupenträger 9 über einen derartigen Doppellenker 11 verbunden.

Die Schwenkachsen 13, 14, 16, 17 verlaufen alle parallel zueinander und parallel zu einer Aufstandsebene 18, die durch ein auf dem Untergrund aufliegendes Untertrum 19 der Raupe 8 vorgegeben ist. In den Fig. 2 und 3 verläuft die Aufstandsebene 18 horizontal. Der Raupenkran 1 und insbesondere auch die Raupenträger 9 haben dann weder eine Wankneigung noch eine Rollneigung. In dieser nicht geneigten Stellung der Fig. 2 und 3 liegen die beiden Unterschwenkachsen 13 und 14 des Doppellenkers 11 etwa auf einer Höhe. Die Querbrücken-Oberschwenkachse 17 liegt in dieser Stellung geringfügig tiefer als die Raupenträger-Oberschwenkachse 16. In dieser Stellung liegt die Raupenträger-Oberschwenkachse 16 vertikal über der Raupenträger-Unterschwenkachse 13 und die Querbrücken-Oberschwenkachse 17 liegt vertikal über der Querbrücken-Unterschwenkachse 14. Der Abstand der beiden Unterschwenkachsen 13, 14 zueinander ist praktisch gleich dem Abstand der beiden Oberschwenkachsen 16, 17 zueinander. Auch der Abstand zwischen den beiden Raupenträger-Schwenkachsen 13, 17 ist in etwa gleich dem Abstand der Querbrücken-Schwenkachsen 14, 17 und entspricht dem Abstand der Unterschwenkachsen 13, 14 zu den Oberschwenkachsen 16, 17. Insgesamt liegen die vier Schwenkachsen 13, 14, 16, 17 in der Stellung nach den Fig. 2 und 3 also etwa in den Ecken eines Quadrats.

Ein Verstellantrieb 20 mit einem Verstellmotor 21 dient zum Verschwenken des Unterlenkers 12 um die Raupenträger-Unterschwenkachse 13 und damit zu einer noch zu beschreibenden Niveauregulierung des Raupenkrans 1. Jeder der Doppellenker 11 des Raupenkrans 1 kann einen derartigen Verstellantrieb 20 aufweisen.

Der Verstellantrieb 20 hat eine Gewindestange 22, die senkrecht zur Aufstandsebene 18 verläuft und über ein fest mit dem Raupenträger 9 verbundenes Axial/Radiallager 23 um die Längsachse der Gewindestange 22 drehbar mit dem Raupenträger 9 verbunden ist. Die Gewindestange 22 hat ein Außengewinde, das als Trapez-Außengewinde ausgeführt ist. Auf der Gewindestange 22 läuft eine Mutter 24, die bezüglich des Raupenträgers 9 drehfest über Verbindungsstücke 25, die eine Passfeder-Führung vorgeben, mit dem Unterlenker 12 verbunden ist. Die Mutter 24 hat ein zum Außengewinde der Gewindestange 22 komplementäres Trapez-Innengewinde.

Die Mutter 24 ist mit einem der Querbrücken-Unterschwenkachse 14 gegenüberliegenden Hebelende 26 des Unterlenkers 12 verbunden. Die Raupenträger-Unterschwenkachse 13 liegt zwischen dem Hebelende 26 und der Querbrücken-Unterschwenkachse 14.

Der Verstellmotor 21 treibt eine Rotation der Gewindestange 22 um deren Längsachse über ein Getriebe 27 an, das als Untersetzungsgetriebe ausgeführt ist. Das Getriebe 27 hat drei miteinander kämmende Zahnräder 28, 29, 30. Das erste Zahnrad 28 ist drehfest mit einer Antriebswelle 31 des Verstellmotors 21 verbunden. Das zweite, als Zwischenrad dienende Zahnrad 29 ist über ein Axial/Radiallager 32 mit dem Raupenträger 9 verbunden. Das dritte Zahnrad 30 ist drehfest mit der Gewindestange 22 verbunden. Die Zahnzahl des zweiten Zahnrads 29 ist größer als die Zahnzahl des ersten Zahnrads 28. Die Zahnzahl des dritten Zahnrads 30 ist größer als die Zahnzahl des zweiten Zahnrads 29.

Über eine Signalleitung 33 steht der Verstellmotor 21 mit einer Steuereinrichtung 34 des Raupenkrans 1 in Signalverbindung. Mit der Steuereinrichtung 34 steht über eine weitere Signalleitung 35 ein Neigungssensor 36 in Verbindung, der wiederum fest am Raupenträger 9 angebracht ist und eine Wankneigung des Raupenträgers 9, also eine Neigung von diesem um eine längs der Fahrtrichtung verlaufende Achse anzeigt. Die Steuereinrichtung 34 kann ein Regelmodul 37 aufweisen, das seinerseits mit dem Neigungssensor 36 in Signalverbindung steht. Das Regelmodul 37 ist als interne Komponente der Steuereinrichtung 34 ausgeführt. Alternativ kann das Regelmodul 37 auch eine mit der Steuereinrichtung 34 in Signalverbindung stehende externe Komponente sein.

Fig. 4 zeigt eine niveauregulierte Stellung der Querbrücke 10 bei zu einer Horizontalen geneigter Aufstandsebene 18 des Raupenträgers 9. Ein Wankwinkel W zwischen der Aufstandsebene 18 und der Horizontalen beträgt 4°. Über den Doppellenker 11 ist in dieser geneigten Stellung des Raupenträgers 9 eine Niveauregulierung der Querbrücke 10 derart gewährleistet, dass eine Querbrücken-Ebene 38 und damit auch der Oberwagen 3 keine Wankneigung (W = 0°) zur Horizontalen aufweist.

In der Stellung nach Fig. 4 nehmen die Schwenkachsen 13, 14, 16, 17 in etwa die Ecken einer Raute ein. Der Doppellenker 11 hat also von der Stellung nach Fig. 3 hin zur Stellung nach Fig. 4 eine Parallelogramm-Schwenkbewegung durchgeführt.

Zur Einstellung einer Grund-Arbeitsposition des Raupenkrans 1 wird der Unterwagen 2 zunächst in eine Roh-Arbeitsposition verfahren. Diese Roh-Arbeitsposition wird so gewählt, dass der Raupenkran 1 keine Rollneigung, also keine Neigung der Aufstandsebene 18 gegenüber der Horizontalen um eine quer zur Fahrtrichtung verlaufende Achse hat. Es ist dann nur die Wankneigung über die Niveauregulierung auszugleichen. Sodann wird der Wankwinkel W des jeweiligen Raupenträgers 9 zur Vertikalen mit Hilfe des Neigungssensors 36 gemessen. Diese Wankneigung wird über die Signalleitung 35 der Steuereinrichtung 34 übermittelt. Das Regelmodul 37 berechnet, beispielsweise über eine Kalibrier-Tabelle, aus der ermittelten Wankneigung einen Stellwert für den Verstellmotor 21. Dieser Stellwert wird dem Verstellmotor 21 über die Signalleitung 33 zugeführt. Entsprechend erfolgt eine Verdrehung der Gewindestange 22 mit dem Verstellantrieb 20 so, dass die Mutter 24 auf der Gewindestange 22 eine axiale Position einnimmt, die einem vorgegebenen Schwenkwinkel des Unterlenkers 12 um die Raupenträger-Unterschwenkachse 13 entspricht. Entsprechend diesem Schwenkwinkel stellt sich der Doppellenker 11 in eine niveauregulierte Position ein, in der trotz der Wankneigung des Raupenträgers 9 um den Wankwinkel W die Querbrückenebene 38 im Wesentlichen horizontal verläuft. Dies gewährleistet einen minimalen Winkel der Hochachse 7 des Oberwagens 3 zur Vertikalen, so dass der Kran-Hauptausleger 4 gewichtsbalanciert seine Nennlast tragen kann.

Die Verstellung des Verstellantriebs 20 zur Niveauregulierung des Oberwagens 3 kann über das Regelmodul 37 automatisch geregelt erfolgen. Alternativ ist es möglich, dass der Neigungssensor 36 beispielsweise einen Wankwinkel anzeigt und dass der Bediener des Raupenkrans 1 auf der Basis dieses Wankwinkels über die Steuereinrichtung 34 eine entsprechende Einstellung des Doppellenkers 11 vornimmt.

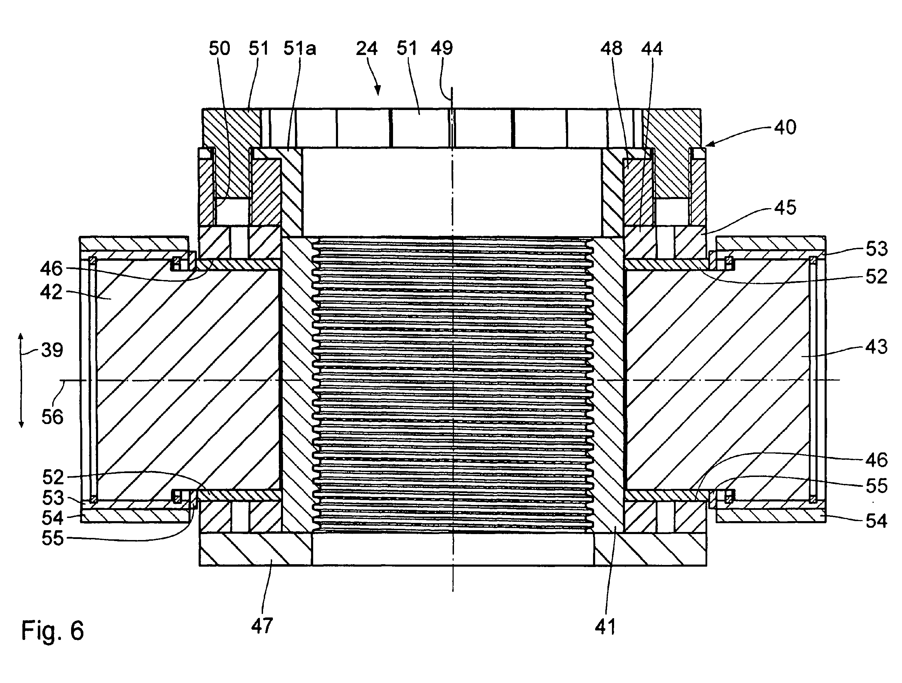

Nachfolgend werden anhand der Fig. 6 bis 8 weitere Details des Verstellantriebs 20 zum Verschwenken des Unterlenkers 12 erläutert.

Fig. 6 zeigt im Detail die Mutter 24. Diese wandelt die Drehbewegung der angetriebenen Gewindestange 22 in eine lineare Bewegung längs der Gewindestange 22 (vergleiche Doppelpfeil 39) um. Diese Linearbewegung 39 wird dann über eine noch zu beschreibende Führungseinrichtung auf den Unterlenker 12 übertragen.

Die Mutter 24 umfasst einen Gewindeträger 40, einen Gewindeeinsatz 41 und ein Paar Bolzen 42, 43.

Der Gewindeträger 40 hat ein inneres Kesselblech 44 und ein äußeres Kesselblech 45, welche den Gewindeeinsatz 41 außen umgeben. Die Kesselbleche 44, 45 haben jeweils Bohrungen 46 zur Aufnahme der Bolzen 42, 43. Die Kesselbleche 44, 45 werden einerseits durch einen unteren Blechring 47 und andererseits durch einen oberen Blechring 48 zusammengehalten. Der untere Blechring 47 hat einen Außenumfang, der dem Außenumfang des äußeren Kesselblechs 45 entspricht. Der untere Blechring 47 schließt daher außen bündig mit dem äußeren Kesselblech 45 ab. Ein Innendurchmesser des unteren Blechrings 47 ist geringfügig größer als der Innengewindedurchmesser des Gewindeeinsatzes 41, sodass der Gewindeeinsatz 41 auf dem unteren Blechring 47 aufliegt. Nach innen hin hat das innere Kesselblech 44 Führungsrippen, die in der Zeichnung nicht dargestellt sind. Komplementär zu diesen Führungsrippen hat eine Außenwand des Gewindeeinsatzes 41 axial, also in Richtung der Achse 49 in der Fig. 6, verlaufende Führungsnuten. Diese Komplementärverbindung stellt eine Verdrehsicherung des Gewindeeinsatzes 41 relativ zum Gewindeträger 40 um die Drehachse 49 dar.

Der obere Blechring 48 hat einen Außendurchmesser, der dem Außendurchmesser des äußeren Kesselblechs 45 entspricht. Der obere Blechring 48 schließt daher nach außen hin bündig mit dem äußeren Kesselblech 45 ab. Der obere Blechring 48 hat axial, also im montierten Zustand des Blechrings 48 parallel zur Gewindestange 22, verlaufende Innengewinde 50, in die Sicherungsschrauben 51 eingeschraubt sind. Zwischen Köpfen der Sicherungsschrauben 51 und dem oberen Blechring 48 ist ein Kragenteil eines Sicherungsbleches 51a festgelegt. Das Sicherungsblech 51a sichert die Axialposition des Gewindeeinsatzes 41 relativ zum Gewindeträger 40.

Der Gewindeträger 40 nimmt den Gewindeeinsatz 41 auf und sichert diesen in Position. Zudem gibt er die Kraft vom Gewindeeinsatz 41 an die Bolzen 42, 43 weiter.

Der Gewindeeinsatz 41 ist aus Bronze.

Die Bolzen 42, 43 haben eine Querschnittsstufe, die den jeweiligen Bolzen 42, 43 in einen inneren Bolzenabschnitt, der benachbart zum Gewindeeinsatz 41 angeordnet ist, und einen äußeren Bolzenabschnitt unterteilt. Der innere Bolzenabschnitt hat einen kleineren Außendurchmesser als der äußere Bolzenabschnitt der Bolzen 42, 43. Die Bolzen 42, 43 sind mit ihren inneren Bolzenabschnitten in die Bohrungen 46 der Kesselbleche 44, 45 eingesetzt. Zwischen diesen Bohrungen 46 und dem inneren Bolzenabschnitt ist jeweils eine Hülse 52 angeordnet. Um die äußeren Bolzenabschnitte der Bolzen 42, 43 herum liegt an diesen zunächst jeweils eine Buchse 53 und jeweils die Buchse 53 umgebend ein Führungskörper 54 an.

Die Buchsen 53 sind in die diese umgebenden Führungskörper 54 eingepresst und auf den jeweiligen Bolzen 42, 43 gesichert. Hierzu dienen jeweils Sicherungsringe. Zwischen dem Gewindeträger 40, nämlich dem äußeren Kesselblech 45 und der äußeren Stirnwand der Hülse 52 einerseits und einem inneren Stirnabschnitt der Buchse 53 andererseits ist eine Verschleißscheibe 55 eingelegt. Bei einem Verdrehen des Führungskörpers 54 relativ zum Gewindeträger 40 um eine in der Fig. 6 horizontal verlaufende Bolzenachse 56 kommt es aufgrund der Verschleißscheibe 55 dort zu einem definierten Verschleiß.

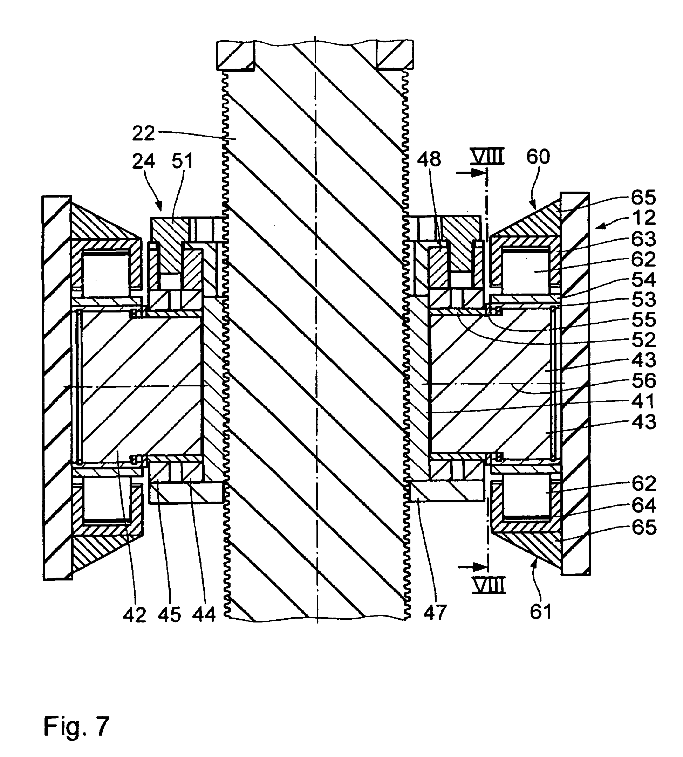

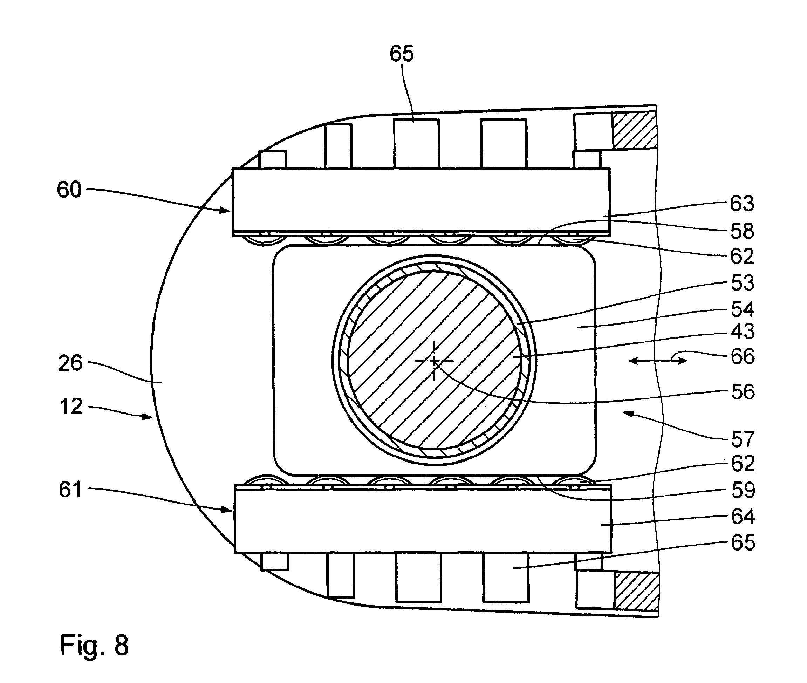

Bei der über den Verstellantrieb 20 angetriebenen Bewegung wird der Unterlenker 12 um die Raupenträger-Unterschwenkachse 13 verschwenkt. Das Hebelende 26 des Unterlenkers 12 vollführt also eine teilkreisförmige Bahnbewegung. Die mit dem Hebelende 26 verbundene Mutter 24 vollführt wiederum eine Linearbewegung längs der Gewindestange 22. Das Hebelende 26 kann daher nicht fest mit der Mutter 24 verbunden werden. Die Kraftübertragung zwischen der Mutter 24 und dem Hebelende 26 erfolgt über eine Führungseinrichtung 57, zu der Details in den Fig. 7 und 8 dargestellt sind. Die Führungseinrichtung 57 ist eine Linear-Führungseinrichtung und ist als Rollenverbindung ausgeführt. Eine obere Stirnwand 58 und eine untere Stirnwand 59 des Führungskörpers 54 laufen jeweils auf einer Rolleneinheit 60, 61 der Führungseinrichtung 57. Jede der Rolleneinheiten 60, 61 hat eine Mehrzahl, in der dargestellten Ausführung jeweils sechs, Lagerrollen 62. Die Lagerrollen 62 der oberen Rolleneinheit 60 sind in einem oberen Lagerkäfig 63 und die Lagerrollen 62 der unteren Rolleneinheit 61 sind in einem unteren Lagerkäfig 64 gelagert. Die Lagerkäfige 63, 64 sind über im Querschnitt der Fig. 7 keilförmige Haltekomponenten 65 mit dem Hebelende 26 des Unterlenkers 12 fest verbunden.

Wenn zum Verschwenken des Unterlenkers 12 das Hebelende 26 längs der Gewindestange 22 verlagert wird, geht dies insbesondere nahe des oberen und unteren Endes des gesamten Schwenkbereichs mit einer linearen Relativbewegung des Führungskörpers 54 zu den Lagerkäfigen 63, 64 längs einer in der Fig. 8 mit einem Doppelpfeil 66 gekennzeichneten Bewegungsrichtung einher. Die Führungseinrichtung 57 sorgt dafür, dass diese Relativbewegung geführt erfolgt, wobei gleichzeitig eine sehr hohe Kraft zwischen dem Führungskörper 54 und den Rolleneinheiten 60, 61 und über diese und die Haltekomponenten 65 an das Hebelende 26 übertragen werden kann. Gleichzeitig verdreht sich bei dieser Bewegung der Führungskörper 54 um die zentrale Bolzenachse 56.

## Patentansprüche

1. Raupenkran (1)
- mit zwei Raupenträgern (9) mit umlaufenden Raupen (8),
- mit mindestens einer die beiden Raupenträger (9) verbindenden Querbrücke (10),
- mit einem Kranaufbau (3) mit mindestens einem um eine Hochachse (7) schwenkbar mit der Querbrücke (10) verbundenen Kranausleger (4, 5),
- mit einem Schwenkgelenk (6), welches die Querbrücke (10) schwenkbar mit dem Kranaufbau (3) verbindet,
wobei mindestens einer der Raupenträger (9) mit der Querbrücke (10) über einen Doppellenker (11) verbunden ist, der umfasst:
- einen Unterlenker (12), der über eine Raupenträger-Unterschwenkachse (13) am Raupenträger (9) und über eine Querbrücken-Unterschwenkachse (14) an der Querbrücke (10) angelenkt ist,
- einen Oberlenker (15), der über eine Raupenträger-Oberschwenkachse (16) am Raupenträger (9) und über eine Querbrücken-Oberschwenkachse (17) an der Querbrücke (10) angelenkt ist,
- einen Verstellantrieb (20) zum Verschwenken mindestens eines der beiden Lenker (12, 15) um die diesem zugeordnete Schwenkachse (13).
**dadurch gekennzeichnet, dass** der Verstellantrieb (20) ein Getriebe (27), insbesondere ein Untersetzungsgetriebe, aufweist.

2. Raupenkran nach Anspruch 1, **dadurch gekennzeichnet, dass** beide Raupenträger (9) mit der Querbrücke (10) über einen Doppellenker (11) mit einem Unterlenker (12) und einem Oberlenker (15) verbunden sind.

3. Raupenkran nach Anspruch 2, **dadurch gekennzeichnet, dass** die Doppellenker (11) beider Raupenträger (9) einen Verstellantrieb (20) zum Verschwenken mindestens eines der beiden Lenker (12) um die diesem zugeordnete Raupenträger-Schwenkachse (13) aufweisen.

4. Raupenkran nach einem der Ansprüche 1 bis 3, **dadurch gekennzeichnet, dass** der Unterlenker (12) mit dem Verstellantrieb (20) verbunden ist.

5. Raupenkran nach Anspruch 1, **dadurch gekennzeichnet, dass** das Getriebe (27) mindestens drei miteinander kämmende Zahnräder (28 bis 30) mit zueinander parallelen Rotationsachsen aufweist.

6. Raupenkran nach einem der Ansprüche 1 bis 5, **dadurch gekennzeichnet, dass** der Verstellantrieb (20) eine mit dem Raupenträger (9) verbundene Gewindestange (22) und eine mit dem angetriebenen Lenker (12) verbundene, zum Gewinde der Gewindestange (22) komplementäre Mutter (24) aufweist.

7. Raupenkran nach Anspruch 6, **dadurch gekennzeichnet, dass** die Gewindestange (22) ein Trapez-Außengewinde und die Mutter (24) ein hierzu komplementäres Trapez-Innengewinde aufweist.

8. Raupenkran nach Anspruch 6 oder 7, **dadurch gekennzeichnet, dass** die Gewindestange (22) mit dem Verstellantrieb (20) angetrieben ist.

9. Raupenkran nach einem der Ansprüche 1 bis 8, **gekennzeichnet durch** eine Steuereinrichtung (34), die mit dem mindestens einen Verstellantrieb (20) in Signalverbindung steht.

10. Raupenkran nach Anspruch 9, **gekennzeichnet durch** einen Neigungssensor (36), der mit der Steuereinrichtung (34) in Signalverbindung steht.

11. Raupenkran nach Anspruch 10, **gekennzeichnet durch** ein Regelmodul (37), welches mit der Steuereinrichtung (34) und dem Neigungssensor (36) in Signalverbindung steht und der Steuereinrichtung (34) Stellsignale zur Verstellung des Verstellmotors (21) derart gibt, dass bei gegebener Wankneigung (W) einer Aufstandsebene (18) des Raupenträgers (9) die Hochachse (7) des Kranaufbaus (3) einen minimalen Winkel zur Vertikalen einnimmt.

12. Raupenkran nach einem der Ansprüche 6 bis 11, **dadurch gekennzeichnet, dass** die Mutter (24) über eine Linear-Führungseinrichtung (57) mit dem angetriebenen Lenker (12) verbunden ist.

## Claims

1. Crawler crane (1)
- having two crawler supports (9) having rotating crawlers (8),
- having at least one transversal bridge (10) connecting the two crawler supports (9),
- having a crane upper structure (3) having at least one crane boom (4, 5) connected to the transversal bridge (10) so as to be pivotable about a vertical axis (7),
- having a pivot articulation (6) that pivotally connects the transversal bridge (10) to the crane upper structure (3),
wherein at least one of the crawler supports (9) is connected to the transversal bridge (10) via a double link (11) comprising:
- a lower link (12) that is articulated on the crawler support (9) via a crawler-support lower pivot shaft (13) and on the transversal bridge (10) via a transversal-bridge lower pivot shaft (14),
- an upper link (15) that is articulated on the crawler support (9) via a crawler-support upper pivot shaft (16) and on the transversal bridge (10) via a transversal-bridge upper pivot shaft (17), and
- an adjustment drive (20) for pivotally displacing at least one of the two links (12, 15) about the pivot shaft assigned to same,
**characterized in that** the adjustment drive (20) has a gear unit (27), in particular a reduction gear.

2. Crawler crane according to claim 1, **characterized in that** both crawler supports (9) are connected to the transversal bridge (10) via a double link (11) having a lower link (12) and an upper link (15).

3. Crawler crane according to claim 2, **characterized in that** the double links (11) of both crawler supports (9) have an adjustment drive (20) for pivotally displacing at least one of the two links (12) about the crawler-support pivot shaft (13) assigned to same.

4. Crawler crane according to one of claims 1 to 3, **characterized in that** the lower link (12) is connected to the adjustment drive (20).

5. Crawler crane according to claim 1, **characterized in that** the gear unit (27) has at least three gear wheels (28 to 30) that are in combing engagement with one another, the axes of rotation of which are parallel to one another.

6. Crawler crane according to one of claims 1 to 5, **characterized in that** the adjustment drive (20) has a threaded rod (22) connected to the crawler support (9) and a nut (24) connected to the driven link (12), the nut being complementary to the thread of the threaded rod (22).

7. Crawler crane according to claim 6, **characterized in that** the threaded rod (22) has a trapezoidal external thread and the nut (24) has a trapezoidal internal thread complementary thereto.

8. Crawler crane according to claim 6 or 7, **characterized in that** the threaded rod (22) is driven by means of the adjustment drive (20).

9. Crawler crane according to one of claims 1 to 8, **characterized by** a control device (34) that is in signal connection with the at least one adjustment drive (20).

10. Crawler crane according to claim 9, **characterized by** an inclination sensor (36) that is in signal connection with the control device (34).

11. Crawler crane according to claim 10, **characterized by** a regulating module (37) that is in signal connection with the control device (34) and with the inclination sensor (36) and provides to the control device (34) positioning signals for adjusting the adjustment motor (21) in such a way that if a roll inclination (W) of a foot print plane (18) of the crawler support (9) is present, the vertical axis (7) of the crane structure (3) assumes a minimal angle relative to the vertical.

12. Crawler crane according to one of claims 6 to 11, **characterized in that** the nut (24) is connected via a linear guiding mechanism (57) to the driven link (12).

## Revendications

1. Grue à chenilles (1)
- avec deux supports de chenilles (9) et des chenilles (8) tournantes,
- avec un pont transversal (10) relié à l'un des deux supports de chenilles (9)
- avec une structure de grue (3) comprenant au moins une flèche de grue (4, 5) reliée au pont transversal (10), pouvant pivoter autour d'un axe vertical (7),
- avec une articulation pivotante (6) qui relie, pouvant pivoter, le pont transversal (10) avec la structure de grue (3),
au moins l'un des supports de grue (9) étant relié avec le pont transversal (10) par l'intermédiaire d'un double bras oscillant (11), qui comprend :
- un bras oscillant inférieur (12) qui est articulé au support de chenille (9) par un axe de pivotement inférieur-support de chenille (13), et au pont transversal (10) par un axe de pivotement inférieur-pont transversal (14),
- un bras oscillant supérieur (15) qui est articulé au le support de chenille (9) par un axe de pivotement supérieur-support de chenille (16) et au pont transversal (10) par un axe de pivotement supérieur-pont transversal (17),
- une commande (20) pour le pivotement d'au moins l'un des deux bras oscillants (12, 15) autour de l'axe de pivotement (13) agencé à celui-ci,
**caractérisée en ce que** la commande (20) présente une boîte de vitesse (27), en particulier, un réducteur de vitesse.

2. Grue à chenilles selon la revendication 1 **caractérisée en ce que** les deux supports de chenille (9) sont reliés avec le pont transversal (10) par l'intermédiaire d'un double bras oscillant (11) comprenant un bras oscillant inférieur (12) et un bras oscillant supérieur (15).

3. Grue à chenilles selon la revendication 2 **caractérisée en ce que** les doubles bras oscillants (11) des deux supports de chenille (9) présentent une commande (20) pour le pivotement d'au moins l'un des deux bras oscillants (12) autour de l'axe de pivotement -support de chenille (13) qui lui est rapporté.

4. Grue à chenilles selon l'une des revendications de 1 à 3 **caractérisée en ce que** le bras oscillant inférieur (12) est relié à la commande (20).

5. Grue à chenilles selon la revendication 1 **caractérisée en ce que** la boîte de vitesse (27) présente au moins trois roues d'engrenage (28 à 30) s'emboitant sur des axes de rotation parallèles entre eux.

6. Grue à chenilles selon l'une des revendications de 1 à 5 **caractérisée en ce que** la commande (20) présente une tige filetée (22) reliée au support de chenille (9) et un écrou (24) complémentaire au filetage de la tige filetée (22) relié au bras oscillant (12) commandé.

7. Grue à chenilles selon la revendication 6 **caractérisée en ce que** la tige filetée (22) présente un filetage extérieur trapézoïdal et que l'écrou (24) présente un filetage intérieur trapézoïdal complémentaire.

8. Grue à chenilles selon les revendications 6 ou 7 **caractérisée en ce que** la tige filetée (22) est manoeuvrée avec la commande (20).

9. Grue à chenilles selon l'une des revendications de 1 à 8 **caractérisée par** un dispositif de commande (34) qui est en liaison par signal avec au moins une commande (20).

10. Grue à chenilles selon la revendication 9 **caractérisée par** un capteur d'inclinaison (36) qui est en relation par signal avec le dispositif de commande (34).

11. Grue à chenilles selon la revendication 10 **caractérisée par** un module de régulation (37) qui est en relation par signal avec le dispositif de commande (34) et le capteur d'inclinaison( 36) et qui donne au dispositif de commande (34) des signaux de position pour le changement de réglage du moteur à cylindrée variable (21) de sorte que pour l'inclinaison (W) donnée d'une surface d'appui (18) du support de chenille (9), l'axe vertical (7) de la structure de la grue (3) se place à un angle minimal par rapport à la verticale.

12. Grue à chenilles selon l'une des revendications de 6 à 11 **caractérisée en ce que** l'écrou (24) est relié avec le bras oscillant (12) commandé par l'intermédiaire d'un dispositif de guidage linéaire (57).
